(19) Europäisches Patentamt

European Patent Office

Office européen des brevets

(11) **EP 0 933 745 B1**

(12) **EUROPÄISCHE PATENTSCHRIFT**

(45) Veröffentlichungstag und Bekanntmachung des Hinweises auf die Patenterteilung:
**03.11.2004   Patentblatt 2004/45**

(51) Int Cl.$^7$: **G08G 1/0968**

(21) Anmeldenummer: **99100281.7**

(22) Anmeldetag: **08.01.1999**

(54) **Navigationsverfahren, insbesondere für Fahrzeuge**

Navigation method, in particular for vehicles

Procédé de navigation, en particulier pour véhicules

(84) Benannte Vertragsstaaten:
**DE FR GB IT**

(30) Priorität: **30.01.1998   DE 19803659**

(43) Veröffentlichungstag der Anmeldung:
**04.08.1999   Patentblatt 1999/31**

(73) Patentinhaber: **Nokia Corporation**
**02150 Espoo (FI)**

(72) Erfinder:
• **Theimer, Wolfgang**
  **44795 Bochum (DE)**
• **Laine, Heikki**
  **33820 Tampere (FI)**
• **Hakala, Hannu**
  **39100 Hämeenkyrö (FI)**
• **Kaikkonen, Jari**
  **36200 Kangasala (FI)**
• **Koskinen, Harri**
  **33720 Tampere (FI)**
• **Valio, Harri**
  **33980 Pirkkala (FI)**

(74) Vertreter: **Urner, Peter, Dipl.-Phys.**
**TER MEER STEINMEISTER & PARTNER GbR,**
**Patentanwälte,**
**Mauerkircherstrasse 45**
**81679 München (DE)**

(56) Entgegenhaltungen:
**WO-A-97/02469          DE-A- 19 547 574**

**Beschreibung**

Die Erfindung betrifft ein Navigationsverfahren, insbesondere ein Navigationsverfahren, das in Fahrzeugen eingesetzt wird.

Bei herkömmlichen Fahrzeugnavigationssystemen befindet sich üblicherweise das gesamte notwendige Kartenmaterial im Fahrzeug und ist beispielsweise auf CD-Rom gespeichert. Zu Beginn einer Fahrt kann dann der Fahrer Startpunkt und Ziel in die Navigationseinheit eingeben, in der dann zu Beginn einer Fahrt die gewünschte Route berechnet wird. Der Fahrer wird dann während der Fahrt mit Hilfe von Richtungspfeilen auf einer Anzeigeeinheit oder anhand einer Kartendarstellung zu seinem Ziel geführt. Um dabei dem Fahrer jeweils die erforderliche Richtungsinformation anzeigen zu können, wird während der Fahrt stets die aktuelle Fahrzeugposition ermittelt. Dies kann beispielsweise über eine Koppelnavigation oder unter Verwendung eines satellitengestützten Positionssystems (GPS - Global Positioning System) erfolgen.

Sollte der Fahrer von der anfänglich berechneten Fahrtroute abweichen, so ist es für das bekannte Fahrzeugnavigationssystem ohne weiteres möglich, aufgrund der aktuellen, von der gespeicherten Route abweichenden Position anhand des im Fahrzeug vorhandenen Kartenmaterials eine neue Route zu dem vorgegebenen Ziel zu berechnen und den Fahrer entsprechend der neu berechneten Route zu seinem Ziel zu führen.

Das bei diesem bekannten Fahrzeugnavigationssystem verwendete Navigationsverfahren benötigt also ständig den Zugriff auf entsprechendes Kartenmaterial, das somit in geeigneter Weise gespeichert und für die Navigationseinheit zugänglich sein muß.

Um dabei stets eine zuverlässige Führung zum gewünschten Ziel zu gewährleisten, muß das Kartenmaterial ständig erneuert werden, um es einigermaßen auf dem neuesten Stand zu halten. Für den Zugriff auf das Kartenmaterial ist dabei eine Speichereinheit, beispielsweise ein CD-Rom Laufwerk, erforderlich, die verhältnismäßig viel Platz beansprucht.

Aus der WO 93/13385 ist bereits eine Fahrzeugnavigationsvorrichtung mit einem Navigationsrechner bekannt, der eine Fahrtroute zu einem bestimmten Ziel auf der Grundlage von Straßenkartendaten ermittelt, die in einem entsprechenden Speicher gespeichert sind. Bei der Fahrt zu dem gewünschten Ziel wird der Fahrer dann visuell und/ oder akustisch mit entsprechenden Fahrtrichtungsanweisungen versorgt.

Hat der Fahrer mit dem Fahrzeug die Route freiwillig oder gezwungenermaßen verlassen, so kann er über eine Eingabeeinrichtung ein "Nicht ausführbar/Neue Route"-Signal eingeben, daß dem Navigationsrechner anzeigt, daß der vorgeschlagenen Route nicht weiter gefolgt werden kann und daß ausgehend von der aktuellen Fahrzeugposition neue Routenvorschläge berechnet werden sollen. Vom Navigationsrechner wird dann unter Verwendung der gespeicherten Straßenkartendaten eine neue Route berechnet, wobei der als nicht befahrbar gekennzeichnete Routenabschnitt außer Acht gelassen wird.

Ferner ist aus der WO 97/02469 ein satellitengestützter Fahrzeugkompaß bekannt, der einen Satellitenempfänger zum Erzeugen der Koordinaten einer aktuellen Position und Eingabemittel zur Eingabe der Position eines gewünschten Ziels aufweist. Aus der Zielposition und der aktuellen Position wird eine Fahrtrichtung ermittelt, die auf einer Anzeigeeinheit dem Fahrer angezeigt wird.

Davon ausgehend liegt der Erfindung die Aufgabe zugrunde, ein weiteres Navigationsverfahren anzugeben, daß es insbesondere ermöglicht, seinen Benutzer sicher zu einem gewünschten Ziel zu führen, ohne daß nach der Ermittlung einer gewünschten Route auf das dafür erforderliche Kartenmaterial zurückgegriffen werden müßte.

Diese Aufgabe wird durch das Navigationsverfahren nach Anspruch 1 gelöst.

Erfindungsgemäß wird also bei einem Navigationsverfahren, das insbesondere in Fahrzeugen einsetzbar ist, zunächst eine Route von einem Startpunkt zu einem Ziel ermittelt und gespeichert, um dann dem Benutzer auf seinem Weg vom Startpunkt zum Ziel Richtungsinformationen entsprechend der ermittelten Route anzugeben, so lange die aktuelle Position des Benutzers zur Route gehört, während eine zur ermittelten Route zurückführende Richtung angegeben wird, wenn die aktuelle Position des Benutzers von der Route abweicht, weil diese verlassen wurde.

Das erfindungsgemäße Navigationsverfahren hat gegenüber dem Stand der Technik den Vorteil, daß nur die die jeweils aktuelle Route betreffenden Land- oder Straßenkarteninformationen, also - im Falle der Anwendung des Navigationsverfahrens in einem Fahrzeug - die einzelnen Straßenkreuzungen mit den jeweiligen Fahrtrichtungsinformationen gespeichert werden müssen, die dann jeweils bei Bedarf automatisch oder auf Anforderung als Navigationsanweisungen angezeigt werden. Verläßt der Benutzer, also beispielsweise der Fahrer eines Kraftfahrzeugs, wegen einem Stau oder aus anderen Gründen die Route, so wird er zur Route zurückgeführt, indem ihm angezeigt wird, in welcher Richtung er zur Route zurückfindet.

Die zur Route zurückführende Richtung wird dabei vorzugsweise aus der ermittelten aktuellen Position und gespeicherten Positionsdaten der Route bestimmt. Um dabei dem Fahrer eines Fahrzeugs die zur Route zurückführende Richtung möglichst schnell erfaßbar anzuzeigen, wird diese relativ zum Fahrzeug angegeben.

Dabei ist es besonders vorteilhaft, wenn die zur Route zurückführende Richtung relativ zum Fahrzeug aus der Fahrtrichtung des Fahrzeugs im Bezugssystem der Route und der Richtung von der aktuellen Position zu einer ausgewählten Position auf der Route berechnet wird.

Zweckmäßigerweise ist dabei vorgesehen, daß die Fahrtrichtung des Fahrzeugs aus den letzten, vorzugsweise aus den letzten drei Fahrzeugpositionen einschließlich der aktuellen Fahrzeugposition abgeschätzt wird. Da die Angabe einer Fahrtrichtung eines Fahrzeugs und insbesondere deren Ermittlung aus drei in etwa gleichen zeitlichen Abständen aufeinanderfolgend erfaßten Fahrzeugpositionen nur dann sinnvoll ist, wenn das Fahrzeug geradeaus fährt, ist erfindungsgemäß vorgesehen, daß zur Abschätzung der Fahrtrichtung des Fahrzeugs die Richtung von der vorletzten Fahrzeugposition zur letzten Fahrzeugposition mit der Richtung von der letzten Fahrzeugposition zur aktuellen Fahrzeugposition verglichen wird, und daß als Fahrtrichtung die Richtung von der vorletzten Fahrzeugposition zur aktuellen Fahrzeugposition verwendet wird, wenn die Abweichung der beiden miteinander verglichenen Richtungen voneinander nicht größer als ein vorgegebener Wert ist. Erfindungsgemäß wird also die Differenz zwischen den letzten beiden Fahrtrichtungen ermittelt und deren Betrag mit einem vorgegebenen Toleranzwert verglichen, der beispielsweise 5° betragen kann, um zu entscheiden ob das Fahrzeug geradeaus oder durch eine Kurve fährt. Im letzteren Fall wird die Abschätzung der Fahrtrichtung frühestens nach einer Aktualisierung der aktuellen Fahrzeugposition wiederholt.

Um bei der Rückführung zur Route trotz des vorgenommenen Umwegs eine möglichst kurze Gesamtstrecke zu erhalten, ist vorgesehen, daß zum Auswählen einer für die Rückführung zur Route geeigneten Position auf der Route die der aktuellen Position am nächsten liegende Position auf der Route ermittelt wird, der Abstand der aktuellen Position von der Position auf der Route, die auf die am nächsten liegende Position folgt, mit deren Abstand zur am nächsten liegenden Position verglichen wird, und wenn die am nächsten liegende Position näher an der folgenden Position liegt als die aktuelle Position, die am nächsten liegende Position ausgewählt wird, und ansonsten die folgende.

Erfindungsgemäß wird also nicht einfach die zur aktuellen Position am nächsten liegende Position ermittelt, was dazu führen könnte, daß der Benutzer entgegen der gewünschten Richtung zur Route zurückgeführt würde, wodurch eine unnötige Wegstreckenverlängerung erfolgen würde, sondern es wird festgestellt, ob er sich bereits im Bereich zwischen der am nächsten liegenden Position auf der Route und der darauf folgenden befindet und falls dies der Fall ist, wird er sinnvollerweise zu dieser Routenposition geführt.

Besonders vorteilhaft ist es, wenn neben der zur Route zurückführenden Richtung auch die Entfernung von der aktuellen Position zur Route, vorzugsweise zu einer ausgewählten Position auf der Route angegeben wird.

Dabei ist es besonders vorteilhaft, wenn die Angabe der zur Route zurückführenden Information ständig aktualisiert wird, bis die Route erreicht ist, und anschließend die der Route entsprechenden Richtungsinformationen angeben werden.

Die ständige Aktualisierung der zur Route zurückführenden Information, also der Entfernung zum ausgewählten Knotenpunkt und der zur Route zurückführenden Richtung ermöglicht es, daß bei dem Rückweg zur Route zwar zunächst eine Position auf der Route angesteuert wird, daß aber auf dem Weg zurück eine andere Position ausgewählt werden kann, wenn sich diese als günstiger erweist. Außerdem hat diese ständige Aktualisierung den Vorteil, daß der Benutzer auch wenn er sich nicht an die zur Route zurückführende Information hält ständig darüber informiert wird, ob oder daß er sich noch weiter von der Route entfernt und wie er zur Route zurückfinden kann.

Besonders vorteilhaft ist es, wenn die aktuellen Richtungsinformationen bei Bedarf auf ein Anforderungssignal vom Benutzer hin ausgegeben werden. Dies ist besonders dann von Vorteil, wenn die jeweiligen Richtungsinformationen dem Benutzer nur akustisch mitgeteilt werden. Er wird damit nicht fortlaufend abgelenkt und kann sich somit auf den Verkehr konzentrieren. Umgekehrt kann er aber auch die aktuelle Richtungsinformation bereits zu einem Zeitpunkt erhalten, zu dem sie eigentlich noch nicht unbedingt erforderlich ist. Der Benutzer kann somit beispielsweise bereits abfragen, in welcher Richtung er an der nächsten Kreuzung weiterfahren muß, obwohl er noch weit von dieser entfernt ist. Dies hat den Vorteil, daß er sich insbesondere bei hohem Verkehrsaufkommen bereits frühzeitig dem Verkehrsfluß und der Navigationsanweisung entsprechend einordnen kann.

Auch wenn er sich von der Route entfernt hat ist es zweckmäßig, wenn er nicht ständig automatisch mit den Richtungsinformationen versorgt wird, da hier keine unmittelbare Beziehung zwischen der Richtungsinformation, also zwischen der zur Route zurückführenden Richtung und der tatsächlichen Fahrstrecke neben der Route besteht. Der Benutzer hat daher die Möglichkeit die Richtungsinformationen dann anzufordern, wenn sie ihn am wenigsten stören.

Bei einer besonders vorteilhaften Ausgestaltung der Erfindung ist vorgesehen, daß die Route in Form von Knotenpunkten gespeichert ist, die einzelne Positionen auf einer Landkarte, insbesondere Straßenkreuzungen darstellen und denen jeweils eine Richtungsinformation zugeordnet ist.

Dabei ist es besonders zweckmäßig, daß die einzelnen Knotenpunkte der Route als GPS-Positionen gespeichert werden, wobei die einzelnen Knotenpunkte der Route in Polarkoordinaten, vorzugsweise als komplexe Zahlen in Polarkoordinaten dargestellt sind, und die aktuelle Position mit Hilfe eines satellitengestützten Positionssystems ermittelt wird.

Auf diese Weise läßt sich das erfindungsgemäße Navigationsverfahren mit dem satellitengestützten globalen Positionsbestimmungssystem (GPS, Global Positioning System) einsetzen. Zusätzlich zu der Satellitenpositionsbestimmung kann die aktuelle Position insbesondere eines Fahrzeugs noch genauer dadurch ermittelt werden, daß zusätzlich zu der satellitengestützten Bestimmung der aktuellen Position auch noch Koppelnavigationsverfahren mit Wegstreckenmessung und Richtungsänderungsmessung eingesetzt werden.

Bei einer besonders bevorzugten Weiterbildung der Erfindung ist vorgesehen, daß Startpunkt und Ziel einer gewünschten Route eingegeben und von einem Navigationsgerät zu einer zentralen Datenverarbeitungseinheit übertragen werden, daß in der zentralen Datenverarbeitungseinheit anhand von entsprechendem Kartenmaterial eine Route ermittelt wird, daß die ermittelte Route zu dem die Route anfordernden Navigationsgerät übertragen und dort gespeichert wird, wobei die Übertragung der Daten über eine Funkverbindung, insbesondere vorzugsweise über eine Datenverbindung in einem zellularen Mobilfunknetz erfolgt.

Durch die erfindungsgemäße Berechnung in einer zentralen Datenverarbeitungseinheit die über eine Datenverbindung in einem zellularen Mobilfunknetz erreichbar ist, wird es ermöglicht, daß jeder Benutzer des erfindungsgemäßen Navigationsverfahrens Zugriff auf das jeweils aktuellste Kartenmaterial hat. Insbesondere ist es dabei vorstellbar, daß in der zentralen Datenverarbeitungseinheit auch aktuelle Verkehrsmeldungen berücksichtigt und dem Benutzer mit der angeforderten Route zur Verfügung gestellt werden können. Durch die Verwendung eines Mobilfunknetzes zur Datenübertragung wird dem Benutzer die Möglichkeit eröffnet, sich gegebenenfalls eine neue Route zu seinem Ziel berechnen zu lassen, wenn ihm die zur Route zurückführenden Navigationsanweisungen nicht ausreichen.

Das erfindungsgemäße Navigationsverfahren, das insbesondere für Fahrzeuge geeignet ist, läßt sich aber auch mit einem tragbaren Navigationsgerät durchführen, das mit einem GPS-Empfänger für die Satellitenpositionsbestimmung ausgerüstet ist. Beispielsweise kann ein Benutzer der das erfindungsgemäße Navigationsverfahren auch zu Fuß nutzen will sich eine Besichtigungsroute durch eine Stadt ermitteln lassen, die an allen wichtigen Sehenswürdigkeiten vorbeiführt, um sich dann von dem Navigationsgerät entsprechend führen zu lassen. Hierbei kann er beliebige Umwege machen und wird doch stets wieder zurück auf seine Route geführt.

Die Erfindung wird im folgenden beispielsweise anhand der Zeichnung näher erläutert. In dieser zeigt:

**Fig. 1** ein schematisches Blockschaltbild eines Navigationssystems zur Durchführung des erfindungsgemäßen Navigationsverfahrens,

**Fig. 2a, 3a und 4a** jeweils eine schematische Darstellung einer Route in einem schematischen Straßenplan mit einem nicht auf der Route befindlichen Fahrzeug,

**Fig. 2b, 3b bzw. 4b** Darstellungen der optischen Anzeige für die in Figur 2a, 3a bzw. 4a veranschaulichte Situation,

**Fig. 5** ein Ablaufdiagramm zur Berechnung der Fahrtrichtungsanzeige,

**Fig. 6** ein Diagramm zur Erläuterung der Abschätzung der Fahrzeugrichtung,

**Fig. 7** ein Diagramm zur Erläuterung der Auswahl eines für die Rückführung zur Route günstigen Knotenpunktes, und

**Fig.8** ein Vektorfeld, das für ausgewählte Positionen auf einem Gitternetz abseits der Route die zur Route zurückführenden Richtungsinformationen darstellt.

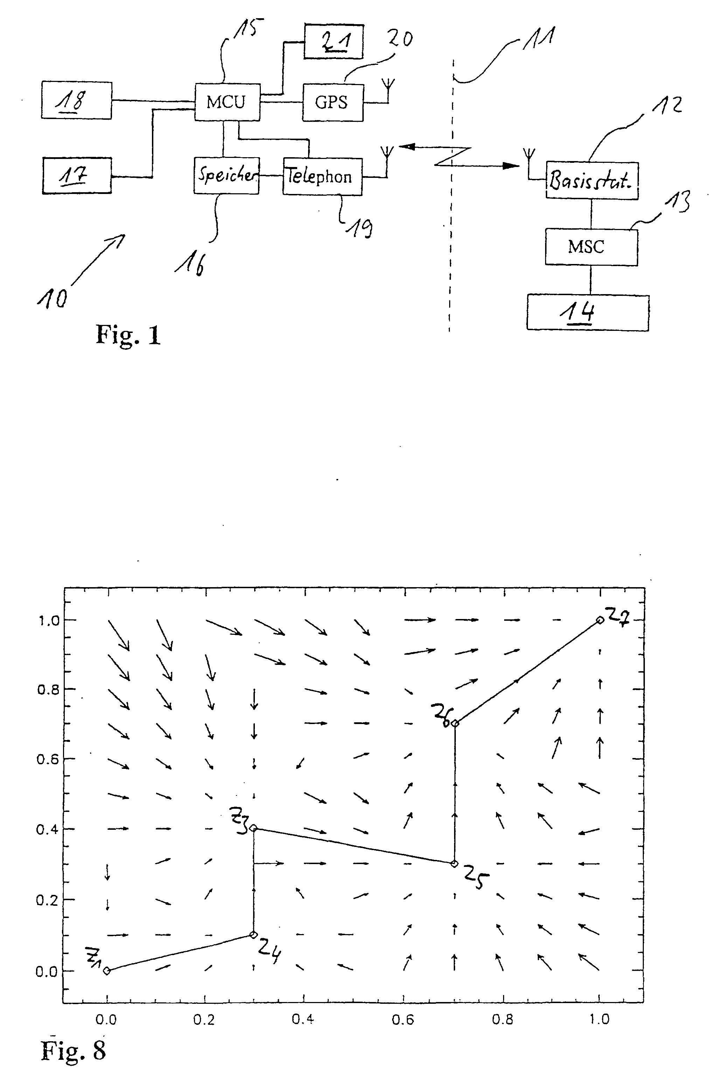

Wie in Figur 1 dargestellt, weist ein System zur Durchführung des erfindungsgemäßen Navigationsverfahrens ein Navigationsgerät 10 auf, das über eine Luftschnittstelle 11 Daten mit einer Basisstation 12 eines Mobilfunknetzes austauscht, an die über eine MSC-Einheit 13 (Mobile Switching Center) ein zentraler Rechner 14 eines Diensteanbieters angeschlossen ist. Der zentrale Rechner 14 des Diensteanbieters dient dazu, aufgrund einer Start- und Zielposition anhand des jeweils neuesten verfügbaren Kartenmaterials, gegebenenfalls unter Berücksichtigung aktueller Verkehrsmeldungen, eine optimale Fahrtroute zu berechnen, die dann zu dem Navigationsgerät 10 übertragen werden kann.

Das Navigationsgerät 10 umfaßt eine Recheneinheit 15, die beispielsweise eine Mikrosteuereinheit MCU (Micro control unit) sein kann. Die Recheneinheit 15 ist mit einem Speicher 16 zum Speichern der Daten einer Route, einer Eingabeeinheit 17 zum Eingeben der Start- und Zielpunkte einer gewünschten Route sowie gegebenenfalls zum Anfordern von Richtungsinformationen und einer Ausgabeeinheit 18 zum Ausgeben der jeweils aktuellen Richtungsinformationen als Navigationsanweisungen. Die Ausgabeeinheit 18 kann dabei beispielsweise eine optische Anzeigeeinheit und/oder eine akustische Ansageeinheit umfassen, um dem Benutzer des Navigationsgeräts 10 die gewünschte Richtungsinformation mitteilen zu können.

Um die Daten der Start- und Zielpunkte einer gewünschten Route zum zentralen Rechner 14 des Diensteanbieters übertragen zu können, ist die Recheneinheit 15 mit einem zellularen Telefon 19 eines Mobilfunknetzes verbunden, das über die Luftschnittstelle 11 mit der Basisstation 12 kommuniziert. Das Telefon 19 ist dabei auch mit dem Speicher 16 verbunden, so daß die vom Telefon 19 empfangenen Daten einer Route direkt im Speicher 16 gespeichert werden können.

Um jeweils die aktuelle Position des Navigationsgeräts 10 erfassen zu können, ist ein GPS-Empfänger 20 vorgesehen, der mit der Recheneinheit 15 verbunden ist, um jeweils aktuelle Positionsdaten an die Recheneinheit 15 zu übertragen. Der GPS-Empfänger 20 dient dabei zur Positionsbestimmung anhand von Satelliten unter Verwendung des GPS (Global Positioning System; Globales Ortsbestimmungssystem). Wenn das Navigationsgerät 10 in einem Fahrzeug installiert ist, kann anstelle oder vorzugsweise zusätzlich zum GPS-Empfänger 20 eine Koppelnavigationseinheit 21 vorgesehen sein, die die aktuelle Position jeweils ausgehend von einer Startposition aufgrund von Wegstreckenmessungen und Richtungsänderungen ermittelt.

Will ein Benutzer, beispielsweise der Fahrer eines Fahrzeugs, für seine Fahrt von A nach B das erfindungsgemäße Navigationsverfahren nutzen, um entlang der optimalen Route von A nach B geführt zu werden, so gibt er Positionsdaten des Punktes A als Startpunkt und Positionsdaten des Punktes B als Zielpunkt über die Eingabeeinheit 17 in das Navigationsgerät 10 ein. Diese Daten werden mit Hilfe des Telefons 19 über das Mobilfunknetz zum zentralen Rechner 14 des Diensteanbieters übertragen, wo die Route anhand des neuesten Kartenmaterials berechnet wird. Die einzelnen Daten der Route, also neben Start- und Zielpunkt auch deren Knotenpunkte, also die Positionen auf der Route, denen eine Richtungsanweisung zugeordnet ist, wie beispielsweise Straßenkreuzungen, Autobahnausfahrten, und dergleichen, werden dann zum Navigationsgerät zurückgeschickt und dort gespeichert.

Die Übertragung der Routendaten zum Navigationsgerät 10 erfolgt ebenso wie die Routenanforderung an den Diensteanbieter beispielsweise als Kurznachricht (SMS, Short Message Service; Kurznachricht-Service) über einen entsprechenden Kurznachrichtendienst des Mobilfunknetzes.

Wie Figur 2a zeigt, weist die Route R eine Vielzahl von einzelnen Knotenpunkten $z_i$ einschließlich der Start- und Zielpunkte $z_1$ und $z_n$ auf, die Krezungspunkte in einem Straßennetz darstellen, dessen Karte K schematisch als Gitter dargestellt ist.

Jedem Knotenpunkt $z_i$, der in Ortskoordinaten eines entsprechenden Koordinatensystems, beispielsweise als GPS-Position, gespeichert ist, ist dabei eine Richtungsanweisung zugeordnet. Dem Knotenpunkt $z_2$ in Figur 2a ist dabei die Richtungsanweisung "rechts abbiegen" zugewiesen die auch mit dem Knotenpunkt $z_4$ verknüpft ist. Am Knotenpunkt $z_7$ wird dem Fahrer dann mitgeteilt, daß er links abbiegen muß. Dem fünften Knotenpunkt, der in Figur 2a als $z_i$ gekennzeichnet ist, ist die Fahrtrichtungsanweisung "weiter geradeaus" zugewiesen.

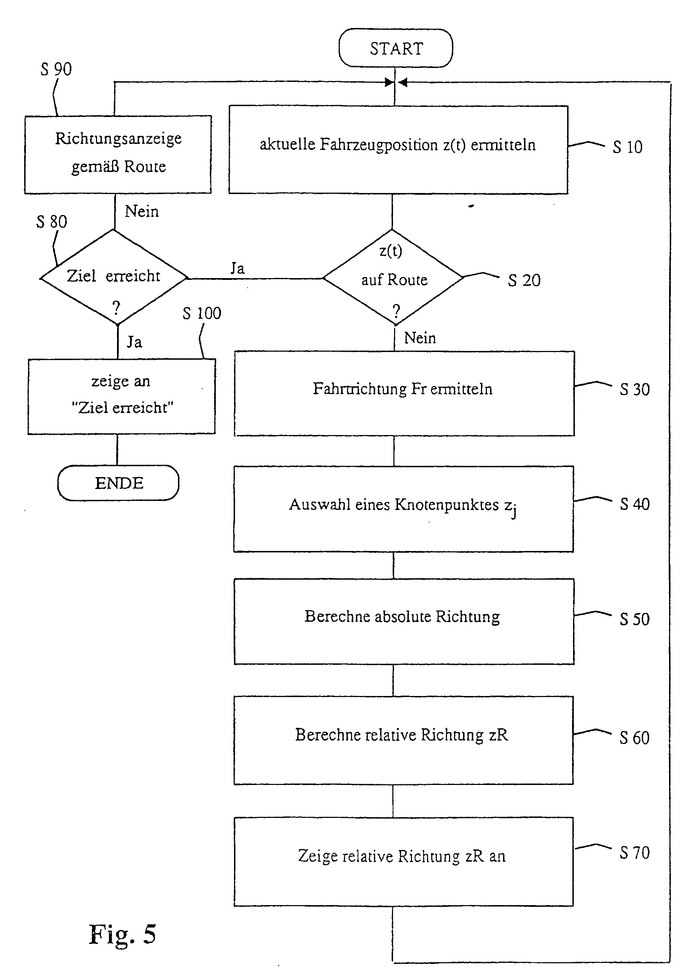

Nachdem die Route im Navigationsgerät 10 gespeichert ist, wird zunächst entsprechend Schritt S10 in Figur 5 die aktuelle Fahrzeugposition ermittelt, um dann im Schritt S20 feststellen zu können, ob die aktuelle Fahrzeugposition $z(t)$ zur Route gehört oder nicht. Ist dies nicht der Fall, so wird als nächstes die Fahrtrichtung Fr des Fahrzeugs im Schritt S30 ermittelt. Anschließend wird im Schritt S40 unter Berücksichtigung der kürzesten Gesamtstrecke ein Knotenpunkt $z_j$ der Route ausgewählt, zu dem das Fahrzeug geführt werden soll. Dabei kann auch die Entfernung zum ausgewählten Knotenpunkt $z_j$ berechnet werden. Im Beispiel von Figur 2a ist dies der der aktuellen Fahrzeugposition $z(t)$ am nächsten liegende Startpunkt $z_1$ der Route R.

Nach der Auswahl des entsprechenden Knotenpunktes $z_j$ wird zunächst im Schritt S50 die absolute Richtung von der aktuellen Fahrzeugposition $z(t)$ zum Knotenpunkt $z_i$, hier also $z_1$, berechnet, um dann unter Berücksichtigung der Fahrtrichtung Fr die relative Richtung zum anzusteuernden Knotenpunkt im Schritt S60 zu berechnen.

Die relative Richtung wird dann entsprechend Schritt S70 vorzugsweise zusammen mit der Entfernung zum anzusteuernden Knotenpunkt angezeigt oder angesagt.

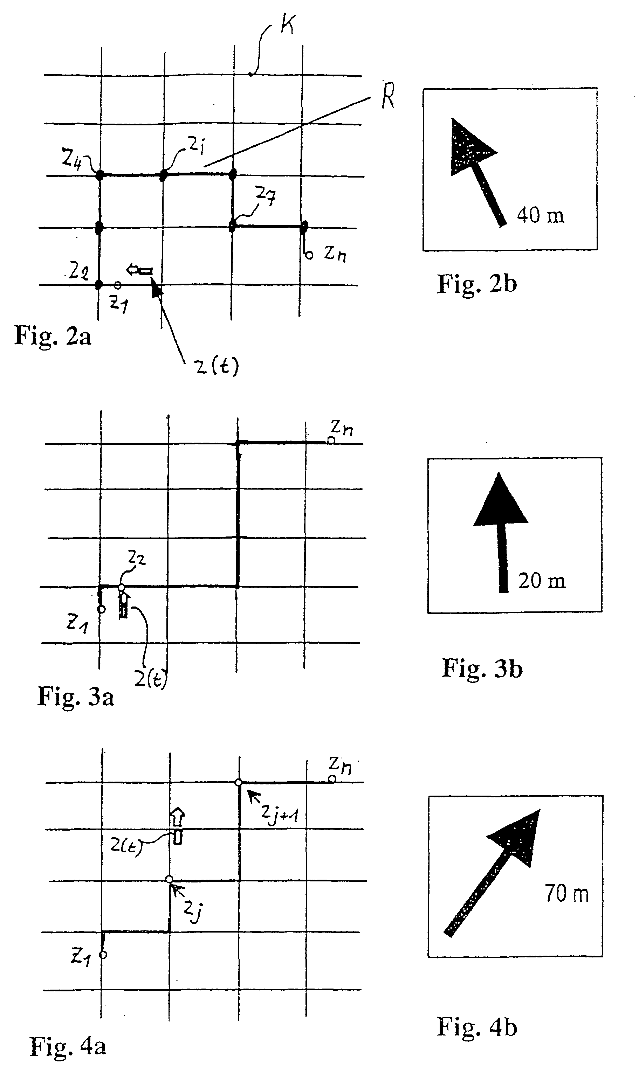

Wie in Figur 2b dargestellt, besteht die Anzeige beispielsweise aus einem Pfeil, dem die Entfernungsangabe zugewiesen ist. Eine akustische Anzeige der Fahrtrichtungsinformation für den Fahrer könnte beispielsweise lauten: "Halb links vorwärts, 40 Meter".

Sobald das Fahrzeug unter Berücksichtigung der Fahrtrichtungsinformationen und der vorhandenen Straßen zur Route R fährt, wird die Fahrzeugposition erneut ermittelt (Schritt S10), um im Schritt S20 zu überprüfen, ob die Route bereits erreicht wurde. Solange dies nicht der Fall ist, werden die Schritte S30 bis S70 wiederholt. Wobei eine laufende Aktualisierung der Anzeige im Schritt S70 nur bei einer optischen Anzeige wie in Figur 2b dargestellt erfolgt, während bei einer akustischen Anzeige die Fahrtrichtungsinformation nur dann angesagt wird, wenn sie der Fahrer entweder anfordert oder wenn sich die einzuhaltende Richtung ändert.

Sobald das Fahrzeug in Figur 2a die Route bei $z_1$ erreicht, wird nach dem Schritt S20 im Schritt S80 abgefragt, ob das Ziel $z_n$ erreicht ist. Solange dies nicht der Fall ist, erfolgt im Schritt S90 die Richtungsanzeige entsprechend der gespeicherten Route und das Navigationsverfahren kehrt zum Schritt S10 zurück, um mittels der Schritte S10, S20, S80 und S90 den Weg des Fahrzeugs entlang der Route R zu überwachen und jeweils die erforderlichen Navigationsanweisungen an den Fahrer auszugeben.

Sobald im Schritt S80 festgestellt wird, daß das Ziel der Route erreicht ist, daß also die Fahrzeugposition $z(t)$ dem Zielpunkt $z_n$ bis auf eine Fehlertoleranz entspricht, wird im Schritt S100 angezeigt. daß das Ziel erreicht ist um anschließend das Verfahren für diese Route R zu beenden.

Figur 3a zeigt ein weiteres Beispiel einer Route R, wobei neben den Startund Zielpunkten $z_1$, $z_n$ nur der Knotenpunkt $z_2$ dargestellt ist. Die Position $z(t)$ des Fahrzeugs ist hier so, daß es sich näher am Punkt $z_2$ als am

Startpunkt $z_1$ der Route befindet. Im Schritt S40 wird daher der Knotenpunkt $z_2$ ausgewählt, um das Fahrzeug zur Route zu führen. Die entsprechende Fahrtrichtungsanweisung, "Geradeaus; 20 Meter", ist in Figur 3b gezeigt.

In Figur 4a ist der Fall dargestellt, daß das Fahrzeug die Route verlassen hat. Das Fahrzeug befindet sich in der Position $z(t)$ von der aus gesehen, der Knotenpunkt $z_j$ der nächste Knotenpunkt der Route ist. Wie Figur 4a zu entnehmen ist, ist es aber im Hinblick auf die kürzeste Gesamtstrecke günstiger, das Fahrzeug zum Knotenpunkt $z_{j+1}$ zu führen, da der Abstand zwischen den Knotenpunkten $z_j$ und $z_{j+1}$ größer ist, als der Abstand der aktuellen Fahrzeugposition $z(t)$ vom Knotenpunkt $z_{j+1}$.

Daher wird im Schritt S40 der Knotenpunkt $z_{j+1}$ ausgewählt.

In Figur 4b ist die optische Darstellung der Fahrtrichtungsinformation, "Vorwärts halb rechts; 70 Meter", dargestellt.

Um die Fahrtrichtung des Fahrzeugs zu ermitteln, werden erfindungsgemäß die letzten drei erfaßten Fahrzeugpositionen einschließlich der aktuellen Fahrzeugposition $z(t)$ verwendet. Die Fahrzeugpositionen können dabei als Koordinaten irgendeines geeigneten Koordinatensystems dargestellt sein. Vorzugsweise werden die einzelnen Positionen, die insbesondere als GPS-Positionen $z(t_i)$ vorliegen als komplexe Zahlen in Polarkoordinaten dargestellt. Die GPS-Positionen werden üblicherweise fortlaufend, beispielsweise im Sekundentakt, aktualisiert.

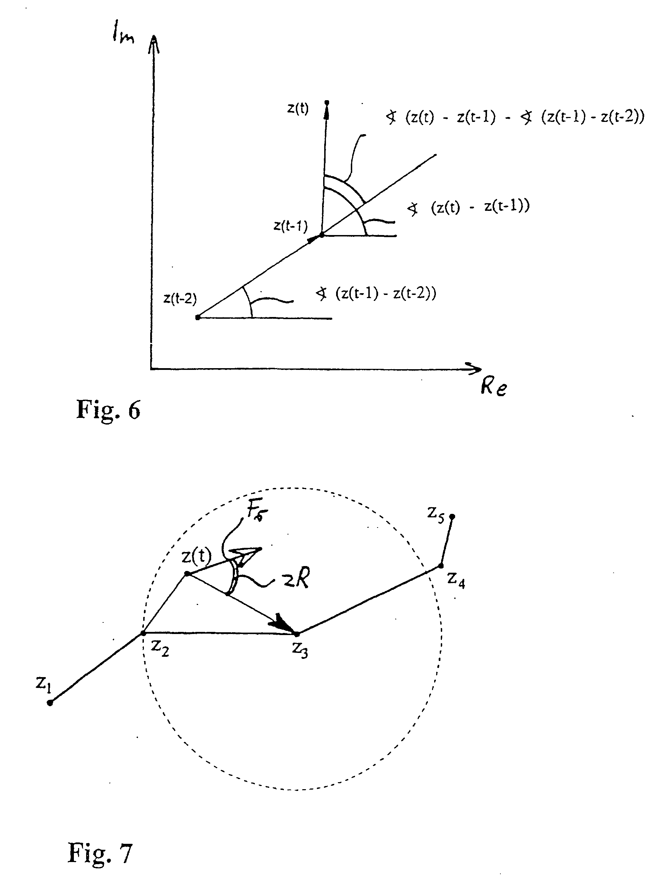

Um zunächst die Fahrtrichtung des Fahrzeug zu ermitteln, wird festgestellt, ob sich die Fahrtrichtung während der Erfassung der letzten drei Fahrzeugpositionen, also beispielsweise in den letzten 2 bis 3 Sekunden, um mehr als einen Toleranzwert $\varepsilon$ geändert hat, wobei $\varepsilon$ beispielsweise 5° betragen kann. Wenn also die Abweichung des in Figur 6 dargestellten Vektors von $z(t-1)$ nach $z(t)$ vom Vektor $z(t-2)$ nach $z(t-1)$ kleiner als der Toleranzwert $\varepsilon$ ist, wenn also diese beiden Vektoren im wesentlichen in die gleiche Richtung zeigen, dann wird die Richtung des Vektors $z(t-2)$ nach $z(t)$ als mittlere Fahrtrichtung Fr gewertet. Um festzustellen, ob die Abweichung der beiden die Fahrtrichtung von $z(t-2)$ nach $z(t-1)$ bzw. von $z(t-1)$ nach $z(t)$ darstellenden Vektoren kleiner ist als der vorgegebene Toleranzwert, werden deren Winkel voneinander subtrahiert und der Absolutbetrag der Differenz mit $\varepsilon$ verglichen. Wenn also

$$| \sphericalangle (z(t) - z(t-1)) - \sphericalangle (z(t-1) - z(t-2)) | < \varepsilon$$

erfüllt ist, dann wird als Fahrzeugrichtung der Winkel des Vektors von $z(t-2)$ nach $z(t)$, also $\sphericalangle (z(t) - z(t-2))$ als Fahrtrichtung angesehen.

Da die Angabe einer Fahrtrichtung Fr nur dann sinnvoll ist, wenn sich das Fahrzeug in Geradeausfahrt befindet, wird, falls die oben genannte Bedingung nicht erfüllt ist, die Bestimmung der Fahrzeugrichtung nach einer Wartezeit wiederholt. Im einfachsten Fall kann dabei die Wartezeit gleich der Aktualisierungszeit der Fahrzeugpositionsbestimmungen sein. Es ist aber auch denkbar, mehrere, beispielsweise drei Aktualisierungen abzuwarten, bevor erneut versucht wird eine Fahrzeugrichtung festzustellen.

Mit Hilfe der aktuellen Fahrzeugposition, wie sie im Schritt S10 ermittelt wurde, wird dann im Schritt S40 ein Knotenpunkt $z_j$ der Route R ausgewählt, zu dem der Benutzer zurückgeführt werden soll. Zur Auswahl dieses unter Berücksichtigung der kürzesten Gesamtstrecke günstigsten Knotenpunktes also der nächsten Kreuzung, wird zunächst derjenige Knotenpunkt $z_j$ der Route R ausgewählt, dessen Abstand von der aktuellen Fahrzeugposition $z(t)$ am geringsten ist. Wie in Figur 7, die ein weiteres Beispiel einer Route zeigt, dargestellt ist, liegt der Knotenpunkt $z_2$ am nächsten zu der aktuellen Fahrzeugposition. Nachdem der nächstliegende Knotenpunkt, hier also $z_2$ ermittelt wurde, wird der euklidische Abstand des nächsten Knotenpunkts, hier also $z_3$, vom Knotenpunkt $z_2$ mit dem euklidischen Abstand der aktuellen Fahrzeugposition $z(t)$ von diesem nachfolgenden Knotenpunkt $z_3$ verglichen. Ist dabei der Abstand der aktuellen Fahrzeugposition vom Knotenpunkt $z_3$ kleiner als dessen Abstand zum vorhergehenden Knotenpunkt $z_2$, wird also die Gleichung

$$|z(t) - z_{j+1}| < |z_j - z_{j+1}|$$

erfüllt, so wird, wie in Figur 7 dargestellt, der Knotenpunkt $z_3$ für die Rückführung zur Route ausgewählt. Andernfalls wird der Knotenpunkt $z_2$ zur Rückführung verwendet.

Als letztes wird dann aus der Fahrtrichtung Fr und der Richtung von der aktuellen Fahrzeugposition $z(t)$ zum Knotenpunkt $z_3$ die relativ zum Fahrzeug gesehene Richtung zR zurück zur Route berechnet, die in Figur 7 als Winkel dargestellt ist.

Figur 8 zeigt eine weitere Route mit sieben Knotenpunkten. Für diese Route sind für eine Vielzahl von Punkten außerhalb der Route die absoluten, zur Route zurückführenden Richtungen dargestellt, die unter Berücksichtigung der kürzesten Gesamtstrecke zur Route zurückführen. Dabei stellt die Länge der einzelnen Richtungsvektoren den Abstand zum jeweils günstigsten Knotenpunkt $z_j$ der Route R dar.

Das erfindungsgemäße Navigationsverfahren ermöglicht es somit einem Benutzer, sich entlang einer unter Verwendung von aktuellem Kartenmaterial ermittelten Route R zu einem gewünschten Ziel führen zu lassen, ohne daß das Kartenmaterial in dem verwendeten Navigationsgerät 10 zur Verfügung stehen muß. Daher kann bei einem Navigationsgerät für das erfindungsgemäße Navigationsverfahren auf aufwendige Speichereinrichtungen für das benötigte Kartenmaterial verzichtet werden, so daß das Navigationsgerät verkleinert werden kann. Ein derartig kleiner Aufbau des Navigationsgeräts ist nicht nur für Anwendungen in Fahrzeugen zweckmäßig, sondern ermöglicht es darüber hinaus auch tragbare Navigationsgeräte zu schaffen, die einen Fußgänger in der Stadt oder auch einen Wanderer im Gelände entlang einer ausgewählten Route sicher zu seinem Ziel führen können.

**Patentansprüche**

1. Navigationsverfahren, insbesondere für Fahrzeuge, bei dem vorab eine Route (R) von einem Startpunkt ($z_1$) zu einem Zielpunkt ($z_n$) ermittelt und gespeichert wird und bei dem während der Führung eines Benutzers entlang der vorab ermittelten und gespeicherten Route (R) fahrzeugseitig kein Kartenmaterial zur Verfügung steht, wobei zur Routenführung

   - die aktuelle Position (z(t)) ermittelt wird, und
   - Richtungsinformationen entsprechend der Route (R) angegeben werden, wenn die aktuelle Position (z(t)) zur Route (R) gehört, während eine zur Route (R) zurückführende Richtung (zR) angegeben wird, wenn die aktuelle Position (z(t)) von der Route (R) abweicht,
   - wobei die zur Route (R) zurückführende Richtung (zR) aus der ermittelten aktuellen Position (z(t)) und einer der gespeicherten Positionen ($z_1$) der Route bestimmt wird, die derart ausgewählt ist, dass die zur Route (R) zurückführende Richtung (zR)

     -- zu einer Position ($z_{j+1}$) führt, die auf die der aktuellen Position (z(t)) am nächsten liegende Position ($z_j$) folgt, wenn sich die aktuelle Position (z(t)) bereits im Bereich zwischen der am nächsten liegenden Position ($z_j$) auf der Route (R) und der darauffolgenden Position ($z_{j+1}$) befindet, und wenn dies nicht der Fall ist,
     -- zur am nächsten liegenden Position ($z_j$) führt.

2. Navigationsverfahren nach Anspruch 1, **dadurch gekennzeichnet, daß** die zur Route (R) zurückführende Richtung (zR) relativ zum Fahrzeug angegeben wird.

3. Navigationsverfahren nach Anspruch 2, **dadurch gekennzeichnet, daß** die zur Route (R) zurückführende Richtung (zR) relativ zum Fahrzeug aus der Fahrtrichtung ($F_r$) des Fahrzeugs im Bezugssystem der Route (R) und der Richtung von der aktuellen Position (z(t)) zu einer ausgewählten Position ($z_j$) auf der Route (R) berechnet wird.

4. Navigationsverfahren nach Anspruch 3, **dadurch gekennzeichnet, daß** die Fahrtrichtung ($F_r$) des Fahrzeugs aus den letzten, vorzugsweise aus den letzten drei Fahrzeugpositionen (z(t-2), z(t-1), z(t)) einschließlich der aktuellen Fahrzeugposition (z(t)) abgeschätzt wird.

5. Navigationsverfahren nach Anspruch 3 oder 4, **dadurch gekennzeichnet, daß** zur Abschätzung der Fahrtrichtung ($F_r$) des Fahrzeugs die Richtung von der vorletzten Fahrzeugposition (z(t-2)) zur letzten Fahrzeugposition (z(t-1)) mit der Richtung von der letzten Fahrzeugposition (z(t- 1)) zur aktuellen Fahrzeugposition (z(t)) verglichen wird, und daß als Fahrtrichtung ($F_r$) die Richtung von der vorletzten Fahrzeugposition (z(t-2)) zur aktuellen Fahrzeugposition (z(t)) verwendet wird, wenn die Abweichung der beiden miteinander verglichenen Richtungen voneinander nicht größer als ein vorgegebener Wert ($\varepsilon$) ist.

6. Navigationsverfahren nach einem der Ansprüche 1 bis 5, **dadurch gekennzeichnet, daß** zum Auswählen einer für die Rückführung zur Route (R) geeigneten Position ($z_j$) auf der Route (R)
   die der aktuellen Position (z(t)) am nächsten liegende gespeicherte Position ($z_j$) der Route (R) ermittelt wird.
   der Abstand der aktuellen Position (z(t)) von der Position ($z_{j+1}$) der Route (R), die auf die am nächsten liegende Position ($z_j$) folgt, mit deren Abstand zur am nächsten liegenden Position ($z_j$) verglichen wird, und wenn die am nächsten liegende Position ($z_j$) näher an der folgenden Position ($z_{j+1}$) liegt als die aktuelle Position (z(t)), die am nächsten liegende Position($z_j$) ausgewählt wird, und ansonsten die folgende.

7. Navigationsverfahren nach einem der vorstehenden Ansprüche, **dadurch gekennzeichnet, daß** zusätzlich zur zur Route (R) zurückführenden Richtung (zR) die Entfernung von der aktuellen Position (z(t)) zur Route (R), vorzugsweise zu einer ausgewählten Position ($z_i$) auf der Route (R) angegeben wird.

8. Navigationsverfahren nach einem der vorstehenden Ansprüche, **dadurch gekennzeichnet, daß** die Angabe der zur Route (R) zurückführenden Information ständig aktualisiert wird, bis die Route (R) erreicht ist, und anschließend die der Route(R) entsprechenden Richtungsinformationen angeben werden.

9. Navigationsverfahren nach einem der vorstehenden Ansprüche, **dadurch gekennzeichnet, daß** die aktuellen Richtungsinformationen bei Bedarf auf ein Anforderungssignal vom Benutzer hin ausgegeben werden.

10. Navigationsverfahren nach einem der vorstehenden Ansprüche, **dadurch gekennzeichnet, daß** die Route (R) in Form von Knotenpunkten ($z_i$) gespeichert ist, die einzelne Positionen auf einer Landkarte, insbesondere Straßenkreuzungen darstellen und denen jeweils eine Richtungsinformation zugeordnet ist.

11. Navigationsverfahren nach Anspruch 10, **dadurch gekennzeichnet, daß** die einzelnen Knotenpunkte ($z_i$) der Route als GPS-Positionen gespeichert, und daß die aktuelle Position ($z(t)$) mit Hilfe eines satellitengestützten Positionssystems ermittelt wird.

12. Navigationsverfahren nach Anspruch 10 oder 11, **dadurch gekennzeichnet, daß** die einzelnen Knotenpunkte ($z_i$) der Route (R) in Polarkoordinaten, vorzugsweise als komplexe Zahlen in Polarkoordinaten dargestellt sind.

13. Navigationsverfahren nach einem der vorstehenden Ansprüche, **dadurch gekennzeichnet, daß** Startpunkt ($z_1$) und Ziel ($z_n$) einergewünschten Route (R) eingegeben und von einem Navigationsgerät (10) zu einer zentralen Datenverarbeitungseinheit (14) übertragen werden,

daß in der zentralen Datenverarbeitungseinheit (14) anhand von entsprechendem Kartenmaterial eine Route (R) ermittelt wird, und

daß die ermittelte Route (R) zu dem die Route (R) anfordernden Navigationsgerät (10) übertragen und dort gespeichert wird.

14. Navigationsverfahren nach Anspruch 13, **dadurch gekennzeichnet, daß** die Übertragung der Daten über eine Funkverbindung, insbesondere über eine Datenverbindung in einem zellularen Mobilfunknetz erfolgt.

## Claims

1. Navigation method, in particular for vehicles, in which first a route (R) from a starting point ($z_1$) to a destination ($z_n$) is determined and stored, and in which during guidance of a user along the previously determined and stored route (R), no map material is available in the vehicle, wherein for route guidance

   - the current position ($z(t)$) is determined, and
   - direction information corresponding to the route (R) is indicated if the current position ($z(t)$) is on the route (R), while a direction (zR) which leads back to the route (R) is indicated if the current position ($z(t)$) is not on the route (R),
   - the direction (zR) which leads back to the route (R) being derived from the determined current position ($z(t)$) and one of the stored positions ($z_1$) of the route which is selected so that the direction (zR) leading back to the route (R)

     -- leads to a position ($z_{j+1}$) following the position ($z_j$) which is closest to the current position ($z(t)$) if the current position ($z(t)$) is already in the area between the closest position ($z_j$) on the route (R) and the next following position ($z_{j+1}$), and if that is not the case leads to the closest position ($z_j$).

2. Navigation method according to Claim 1, **characterized in that** the direction (zR) which leads back to the route (R) is indicated relative to the vehicle.

3. Navigation method according to Claim 2, **characterized in that** the direction (zR) which leads back to the route (R) is calculated, relative to the vehicle, from the direction of travel ($F_r$) of the vehicle in the reference system of the route (R) and from the direction from the current position ($z(t)$) to a selected position ($z_i$) on the route (R).

4. Navigation method according to Claim 3, **characterized in that** the direction of travel ($F_r$) of the vehicle is estimated from the last, preferably from the last three, vehicle positions (z(t-2), z(t-1), z(t)) including the current vehicle position (z(t)).

5. Navigation method according to Claim 3 or 4, **characterized in that,** in order to estimate the direction of travel ($F_r$) of the vehicle, the direction from the last but one vehicle position (z(t-2)) to the last vehicle position (z(t-1)) is compared with the direction from the last vehicle position (z(t-1)) to the current vehicle position (z(t)), and **in that** the direction from the last but one vehicle position (z(t-2)) to the current vehicle position (z(t)) is used as the direction of travel ($F_r$) provided the difference between the two directions which are compared with one another is not greater than a predetermined value ($\varepsilon$).

6. Navigation method according to one of Claims 1 to 5, **characterized in that,** in order to select, on the route (R), a position ($z_j$) which is suitable for returning to the route (R), that stored position ($z_j$) on the route (R) is determined which is closest to the current position (z(t)), the distance from the current position (z(t)) to that position ($z_{j+1}$) on the route (R) which follows the closest position ($z_j$) is compared with its distance to the closest position ($z_j$), and, if the closest position ($z_j$) is closer to the following position ($z_{j+1}$) than the current position (z(t)), the closest position ($z_j$) is selected, and otherwise the following position is selected.

7. Navigation method according to one of the preceding claims, **characterized in that,** in addition to the direction (zR) which leads back to the route (R), the distance from the current position (z(t)) to the route (R) is indicated, preferably the distance to a selected position ($z_i$) on the route (R).

8. Navigation method according to one of the preceding claims, **characterized in that** the indication of the information which leads back to the route (R) is continuously updated until the route (R) is reached and, after this, the direction information corresponding to the route (R) is indicated.

9. Navigation method according to one of the preceding claims, **characterized in that** the current direction information is output, if required, in response to a request signal from the user.

10. Navigation method according to one of the preceding claims, **characterized in that** the route (R) is stored in the form of nodes ($z_i$) which represent individual positions on a map, in particular road junctions, and to each of which a direction information item is assigned.

11. Navigation method according to Claim 9, **characterized in that** the individual nodes ($z_i$) on the route are stored as GPS positions, and **in that** the current position (z(t)) is determined with the aid of a satellite-based position system.

12. Navigation method according to Claim 10 or 11, **characterized in that** the individual nodes ($z_i$) on the route (R) are displayed in polar coordinates, preferably as complex numbers in polar coordinates.

13. Navigation method according to one of the preceding claims, **characterized in that** the starting point ($z_1$) and destination ($z_n$) of a desired route (R) are entered, and are transmitted from a navigation device (10) to a central data processing unit (14), **in that** appropriate map material is used in the central data processing unit (14) to determine a route (R), and **in that** the determined route (R) is transmitted to the navigation device (10) requesting the route (R), and is stored there.

14. Navigation method according to Claim 13, **characterized in that** the data are transmitted via a radio link, in particular via a data link in a cellular mobile radio network.

**Revendications**

1. Procédé de navigation, en particulier pour des véhicules, dans lequel préalablement un itinéraire (R) d'un point de départ ($z_1$) à un point destination ($z_n$) est déterminé et mémorisé, et pour lequel, pendant le guidage d'un utilisateur le long de l'itinéraire (R) préalablement déterminé et mémorisé, aucun matériau de cartographie n'est disponible côté véhicule, où, pour effectuer le guidage sur l'itinéraire

   - la position réelle (z(t)) est déterminée, et
   - des informations directionnelles, correspondant à l'itinéraire (R), sont indiquées lorsque la position réelle (z(t)) appartient à l'itinéraire (R), tandis qu'une direction (zR) ramenant à l'itinéraire (R) est indiquée lorsque la position réelle (z(t)) diffère de l'itinéraire (R),

- où la direction (zR), ramenant à l'itinéraire (R), est déterminée à partir de la position réelle (z(t)) déterminée et d'une des positions ($z_i$) mémorisées de l'itinéraire, sélectionnées de manière que la direction (zR) ramenant à l'itinéraire (R)

-- mène à une position ($z_{j+1}$) qui suit la position ($z_j$) la plus proche de la position actuelle (z(t)), lorsque la position actuelle (z(t)) se trouve déjà dans la zone située entre la position ($z_j$) la plus proche, sur l'itinéraire (R), et la position ($z_{j+1}$) la suivante et, si ceci n'est pas le cas,
-- mène à la position ($z_j$) immédiatement la suivante.

2. Procédé de navigation selon la revendication 1, **caractérisé en ce que** la direction (zR) ramenant à l'itinéraire (R) est indiquée par rapport au véhicule.

3. Procédé de navigation selon la revendication 2, **caractérisé en ce que** la direction (zR) ramenant à l'itinéraire (R) est calculée par rapport au véhicule, à partir de la direction de roulage ($F_r$) du véhicule dans le système de référence de l'itinéraire (R) et la direction allant de la position actuelle (z(t)) à une position ($z_j$) sélectionnée sur l'itinéraire (R).

4. Procédé de navigation selon la revendication 3, **caractérisé en ce que** la direction de roulage ($F_r$) du véhicule est estimée à partir des dernières, de préférence, des trois dernières, positions de véhicule (z(t-2), z(t-1), z(t)), y compris la position de véhicule actuelle (z(t)).

5. Procédé de navigation selon la revendication 3 ou 4, **caractérisé en ce que**, pour effectuer l'estimation de la direction de roulage ($F_r$) du véhicule, la direction, allant de l'avant dernière position de véhicule (z(t-2)) à la dernière position de véhicule (z(t-1)), est comparée à la direction, allant de la dernière position de véhicule (z(t-1)) à la position de véhicule actuelle (z(t)), et **en ce qu'**on utilise comme direction de roulage ($F_r$) la direction, allant de l'avant dernière position de véhicule (z(t-2)) à la position de véhicule actuelle (z(t)), si l'écart entre les deux directions comparées ensemble n'est pas supérieur à une valeur ($\varepsilon$) prédéterminée.

6. Procédé de navigation selon l'une des revendications 1 à 5, **caractérisé en ce que**, pour sélectionner une position ($z_j$) sur l'itinéraire (R), qui convient pour le retour à l'itinéraire (R),
on détermine la position ($z_j$) de l'itinéraire (R) qui a été mémorisée comme étant la plus proche de la position actuelle (z(t)),
on compare l'espacement de la position actuelle (z(t)), vis-à-vis de la position ($z_{j+1}$) de l'itinéraire (R) venant ensuite à la position ($z_j$) la plus proche, à son espacement par rapport à la position ($z_j$) la plus proche et,
si la position ($z_j$) la plus proche est située plus près de la position ($z_{j+1}$) suivante que la position actuelle (z(t)), on sélectionne la position ($z_j$) immédiatement la suivante et, au reste, on sélectionne la suivante.

7. Procédé de navigation selon l'une des revendications précédentes, **caractérisé en ce que**, en plus de la direction (zR) ramenant à l'itinéraire (R), on indique l'éloignement vis-à-vis de la position actuelle (z(t)) par rapport à l'itinéraire (R), de préférence par rapport à une position ($z_1$) sélectionnée sur l'itinéraire (R).

8. Procédé de navigation selon l'une des revendications précédentes, **caractérisé en ce que** l'indication de l'information de retour à l'itinéraire (R) est actualisée en permanence, jusqu'à ce qu'on ait atteint l'itinéraire (R) et, ensuite, l'information directionnelle correspondant à l'itinéraire (R) est indiquée.

9. Procédé de navigation selon l'une des revendications précédentes, **caractérisé en ce que** les informations directionnelles actuelles sont éditées en cas de besoin, sur un signal de requête émanant de l'utilisateur.

10. Procédé de navigation selon l'une des revendications précédentes, **caractérisé en ce que** l'itinéraire (R) est mémorisé sous la forme de points nodaux ($z_j$), qui constituent les différentes positions sur une carte géographique terrestre, en particulier des croisements routiers, et à chacun desquels est associée une information directionnelle.

11. Procédé de navigation selon la revendication 10, **caractérisé en ce que** les différents points nodaux ($z_1$) de l'itinéraire sont mémorisés sous la forme de positions GPS et **en ce que** la position actuelle (z(t)) est déterminée à l'aide d'un système de positionnement assisté par satellite.

12. Procédé de navigation selon la revendication 10 ou 11, **caractérisé en ce que** les différents points nodaux ($z_j$) de

l'itinéraire (R) sont représentés en coordonnées polaires, de préférence sous la forme de nombres complexes dans des coordonnées polaires.

13. Procédé de navigation selon l'une des revendications précédentes, **caractérisé en ce que** le point de départ ($z_1$) et la destination ($z_n$) d'un itinéraire (R) souhaité sont introduits et transmis, par un système de navigation (10), à une unité de traitement de données (14) centrale,

    **en ce que**, dans l'unité de traitement de données (14) centrale, un itinéraire (R) est déterminé à l'aide d'un matériau cartographique correspondant, et

    **en ce que** l'itinéraire (R) déterminé est transmis à l'appareil de navigation (10) demandant l'itinéraire (R) et y est mémorisé.

14. Procédé de navigation selon la revendication 13, **caractérisé en ce que** la transmission des données s'effectue par une liaison radio, en particulier par une liaison de données dans un réseau radio mobile cellulaire.

**Fig. 1**

**Fig. 8**

Fig. 2a

Fig. 2b

Fig. 3a

Fig. 3b

Fig. 4a

Fig. 4b

START

S 90

| Richtungsanzeige gemäß Route | | aktuelle Fahrzeugposition z(t) ermitteln | S 10 |

Nein

S 80

Ziel erreicht ?

Ja

z(t) auf Route ? — S 20

S 100

Ja

Nein

| zeige an "Ziel erreicht" |

| Fahrtrichtung Fr ermitteln | S 30 |

ENDE

| Auswahl eines Knotenpunktes $z_j$ | S 40 |

| Berechne absolute Richtung | S 50 |

| Berechne relative Richtung zR | S 60 |

| Zeige relative Richtung zR an | S 70 |

Fig. 5

Fig. 6

Fig. 7